# EUROPEAN PATENT SPECIFICATION

(11) **EP 3 131 181 B1**
(45) Date of publication and mention of the grant of the patent: **06.03.2019**
(21) Application number: 16183378.5
(22) Date of filing: 09.08.2016
(51) Int. Cl.: H02J 50/10, H02J 50/80, B60L 11/18, H02P 27/06, H02P 6/20, H02P 21/18

(54) **HOME APPLIANCE**
HAUSHALTSGERÄT
APPAREIL DOMESTIQUE

(30) Priority: 11.08.2015 KR 20150113424
(43) Date of publication of application: 15.02.2017
(73) Proprietor: LG ELECTRONICS INC., Yeongdeungpo-gu Seoul 07336 (KR); Research Cooperation Foundation of Yeungnam University, Gyongsan-si Gyungsangbuk-do 38541 (KR)
(72) Inventor: LEE Soongkeun, Seoul 08592 (KR); LEE Chungill, Seoul 08592 (KR); PARK Seonwook, Seoul 08592 (KR); BAE Sungwoo, Daegu 42016 (KR); YUN Jaejung, Daegu 41075 (KR); KIM Jeongtae, Gyungsangnam-do 53071 (KR); LEE Younggeun, Gyonggi-do 10103 (KR)
(74) Representative: Ter Meer Steinmeister & Partner

(56) References cited:
- EP-A1- 2 897 253
- US-A1- 2013 147 279

## Description

### BACKGROUND OF THE INVENTION

### 1. Field of the invention

The present invention relates to a home appliance and, more particularly, to a home appliance capable of performing wireless power transmission and bidirectional communication between circuit units.

### 2. Description of the Related Art

Home appliances refer to apparatuses used at home, such as a laundry treatment machine and a refrigerator, and accomplish operations such as laundry treatment, food refrigeration, freezing, etc., based on rotation of a motor, for users.

With advances in various communication schemes and advances in various display schemes, study into adding functions for user convenience to the home appliances has been conducted.

EP 2 897 253 A1 describes a non-contact electric power feeding system that includes an electric power feeding device, and an electric power receiving device configured to receive electric power fed from the electric power feeding device. The electric power feeding device includes a primary-side coil, a driver, a primary-side control unit, and a primary-side communication unit. The electric power receiving device includes a secondary-side coil, a rectifier unit, a regulator, a secondary-side communication unit, and a secondary-side control unit.

### SUMMARY OF THE INVENTION

An object of the present invention is to provide a home appliance capable of performing wireless power transmission and bidirectional communication between circuit units. The objects of the present invention are solved by the features of the independent claim.

In accordance with one embodiment of the present invention, the above and other objects can be accomplished by the provision of a home appliance, preferably including a first circuit unit including a converter configured to convert an Alternating Current (AC) power into a Direct Current (DC) power, a first coil, a first modulator/demodulator configured to wirelessly transmit the DC power generated by the converter using the first coil, and a first controller configured to control the first modulator/demodulator, and a second circuit unit including a second coil configured to receive a wireless power transmitted by the first circuit unit, a second modulator/demodulator configured to convert the wireless power received from the second coil, a rectifier configured to rectify an AC power generated by the second modulator/demodulator, and a second controller configured to control operation of the second modulator/demodulator, wherein the first modulator/demodulator and the second modulator/demodulator perform bidirectional time-division data communication.

The power rectified by the rectifier may be supplied for operation of the second controller in the second circuit unit.

The first modulator/demodulator and the second modulator/demodulator may vary impedance according to a load modulation scheme.

The first modulator/demodulator includes a first capacitor; a second capacitor connected in parallel to the first capacitor; and a first switching element having one terminal connected to the second capacitor and the other terminal connected to a ground, and impedance may vary according to a switching operation of the first switching element.

The second modulator/demodulator may include a third capacitor; a fourth capacitor connected in parallel to the third capacitor; and a second switching element having one terminal connected to the fourth capacitor and the other terminal connected to a ground, and impedance may vary according to a switching operation of the second switching element.

The first circuit unit further includes a first voltage detector configured to detect a voltage of a first connection point between the first capacitor and the second capacitor, the first voltage detector may include, an envelope detector configured to detect an envelope of the voltage of the first connection point, a low-pass filter configured to low-pass filter the detected envelope, a decoupler to eliminate a DC component, and a comparator.

The first circuit unit includes the first voltage detector configured to
detect a voltage of a first connection point between the first capacitor and the second capacitor and a voltage detected by the first voltage detector is input to the first controller.

The first circuit unit further includes a first communication unit to transmit a data signal to the first modulator/demodulator or convert a signal received from the first modulator/demodulator into the data signal, for data communication, and the second circuit unit may further include a second communication unit to transmit a data signal to the second modulator/demodulator or convert a signal received from the second modulator/demodulator into the data signal, for data communication.

The home appliance may further comprise a door configured to be opened and closed, wherein the second circuit unit may be attached to the door.

The home appliance may further comprise an input unit and a
display, wherein at least one of the input unit and the display may further be attached to the door.

The home appliance may be any one of a laundry treatment machine, a refrigerator, an air conditioner, and a cooking machine.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing a laundry treatment machine, which is an exemplary home appliance, according to an embodiment of the present invention;
FIG. 2 is a side sectional view of the laundry treatment machine of FIG. 1;
FIG. 3 is a block diagram of the internal configuration of the laundry treatment machine of FIG. 1;
FIG. 4 is a circuit diagram of the internal configuration of the driving unit shown in FIG. 3;
FIG. 5 is a block diagram of the internal configuration of an inverter controller shown in FIG. 4;
FIG. 6 is a block diagram of the internal configuration of a first circuit unit and a second circuit unit of a home appliance according to an embodiment of the present invention;
FIG. 7 is a circuit diagram of the first circuit unit and the second circuit unit of FIG. 6;
FIGS. 8 to 10b are views referred to for explaining operations of the first circuit unit and the second circuit unit of FIG. 6;
FIG. 11 is a perspective view showing an air conditioner, which is another exemplary home appliance, according to an embodiment of the present invention; and
FIG. 12 is a perspective view showing a refrigerator, which is still another exemplary home appliance, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

The suffixes "module" and "unit" in elements used in description below are given only in consideration of ease in preparation of the specification and do not have specific meanings or functions. Therefore, the suffixes "module" and "unit" may be used together.

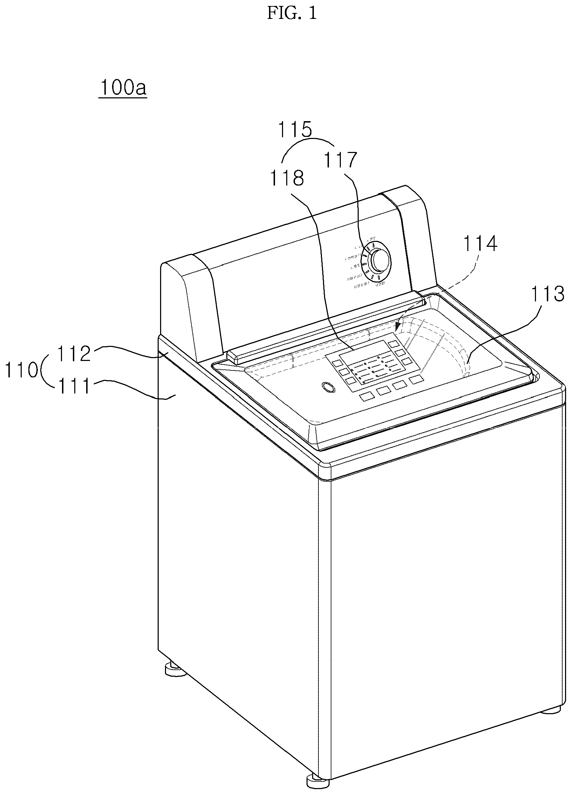

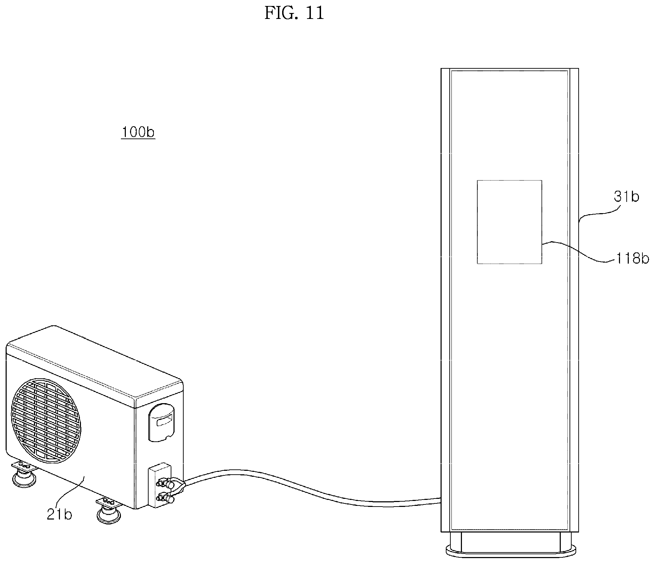

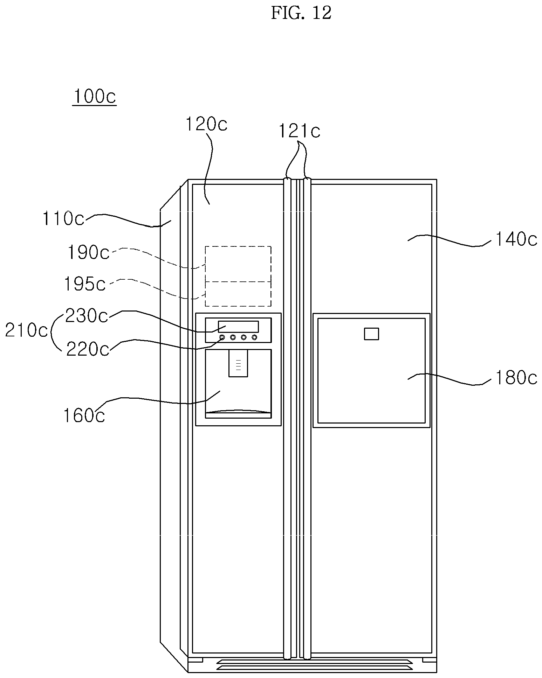

A home appliance 100 described in the present disclosure may include various devices such as a laundry treatment machine 100a of FIG. 1, an air conditioner 100b of FIG. 11, and a refrigerator 100c of FIG. 12. The home appliance 100 may also include a cooking machine, a TV, an air purifier, and a water purifier.

Hereinafter, the laundry treatment machine 100a of FIG. 1, the air conditioner 100b of FIG. 11, and the refrigerator 100c of FIG. 12 will be described as the home appliance 100.

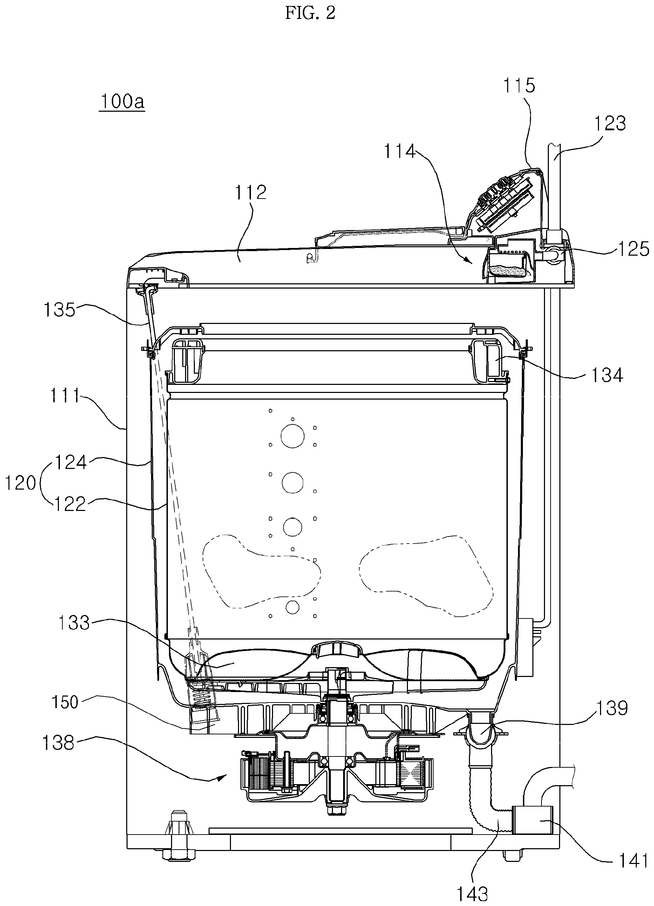

FIG. 1 is a perspective view showing a laundry treatment machine, which is an exemplary home appliance, according to an embodiment of the present invention and FIG. 2 is a side sectional view of the laundry treatment machine of FIG. 1.

Referring to FIGS. 1 and 2, the laundry treatment machine 100a, which is an exemplary home appliance, according to an embodiment of the present invention is a top load type laundry treatment machine configured such that laundry is introduced into a washtub from above. Such a top load type laundry treatment machine includes a washing machine that implements washing, rinsing, and dehydration of laundry introduced thereinto and a drying machine that dries wet laundry introduced thereinto. The following description will be given focusing on the washing machine.

The washing machine 100a includes a casing 110 forming the external appearance of the laundry treatment machine 100a, a control panel 115 that includes an input unit 117 for receiving a variety of control commands from a user and a display unit for displaying information regarding an operational state of the washing machine 100a and thus provides a user interface, and a door 113 hinged to the casing 110 to open and close a laundry introduction opening through which laundry is introduced and removed.

The casing 110 may include a main body 111 defining a space in which a variety of components of the washing machine 100a may be accommodated and a top cover 112 which is provided at the upper side of the main body 111, the top cover defining the laundry introduction opening through which laundry is introduced into an inner tub 122.

The casing 110 is described as including the main body 111 and the top cover 112. However, the casing 110 is not limited thereto and any other casing configuration defining the external appearance of the washing machine 100a may be used.

Meanwhile, a support rod 135 will be described as being coupled to the top cover 112 that constitutes the casing 110. However, the support rod 135 is not limited thereto and may be coupled to any fixed portion of the casing 110.

The control panel 115 includes the input unit 117 for manipulating an operational state of the washing machine 100a and the display unit 118 located at one side of the input unit 117 to display an operational state of the washing machine 100a.

The door 113 is used to open and close the laundry introduction opening (not shown) formed in the top cover 112. The door 113 may include a transparent member, such as tempered glass, to allow the user to see the interior of the main body 111.

Meanwhile, in relation to an embodiment of the present invention, the control panel 115 may be located on the door 113.

Alternatively, only a part of the control panel 115 may be located on the door 113.

For example, the display unit 118 and a circuit unit for controlling the display unit 118 may be located on the door 113. Meanwhile, the input unit 117 may further be located on the door 113 configured to be opened and closed.

If at least one of the display unit 118 and the input unit 117 are located on the door 113 configured to be opened and closed, a display controller (not shown) for signal processing of the display unit 118 or the input unit 117 should be arranged in the proximity of the display unit 118 or the input unit 117.

Therefore, the display controller is desirably located on the door 113. If a circuit unit (not shown), such as a circuit board (not shown), including the display controller (not shown) is located on the door 113 configured to be opened and closed, wires should be connected to additionally supply a drive power to the circuit unit (not shown).

However, when the wires are connected to the circuit unit (not shown) attached to the door 113 configured to be opened and closed, the wires may wear down and may deteriorate aesthetics.

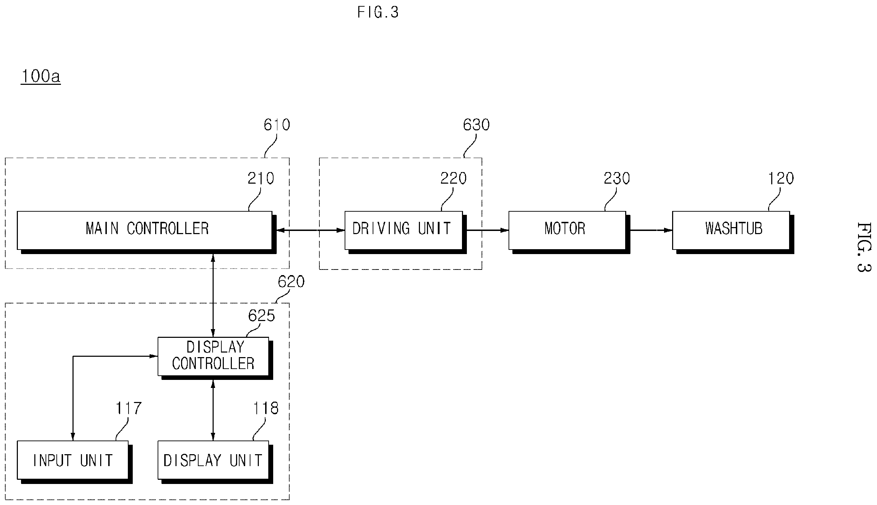

Accordingly, the present invention adopts a wireless power transmission scheme during supply of a power to the circuit unit (not shown) attached to the door 113 configured to be opened and closed. The wireless power transmission scheme will be described later with reference to FIGS. 3 to 6.

The washing machine 100a may include a washtub 120. The washtub 120 may consist of an outer tub 124 for containing wash water and an inner tub 122 for accommodating laundry, the inner tub 122 being rotatably mounted in the outer tub 124. A balancer 134 may be provided in an upper region of the washtub 120 to compensate for eccentricity generated during rotation of the washtub 120.

The washing machine 100a may further include a pulsator 133 rotatably mounted at a lower part of the washtub 120.

A drive device 138 serves to supply drive power required to rotate the inner tub 122 and/or the pulsator 133. A clutch (not shown) may be provided to selectively transmit drive power of the drive device 138 such that only the inner tub 122 is rotated, only the pulsator 133 is rotated, or both the inner tub 122 and the pulsator 133 are simultaneously rotated.

The drive device 138 is operated by a driving unit 220 of FIG. 3, i.e., a drive circuit. This will be described later with reference to FIG. 3 and the following drawings.

Meanwhile, the top cover 112 is provided with a detergent box 114, in which a variety of additives such as detergent for washing, fabric conditioner, and/or bleach are accommodated, so as to be pulled away from or pushed towards the top cover 112. Wash water supplied through a water supply passageway 123 is supplied into the inner tub 122 by way of the detergent box 114.

The inner tub 122 has a plurality of holes (not shown) such that wash water supplied into the inner tub 122 flows to the outer tub 124 through the holes. A water supply valve 125 may be provided to control the flow of wash water through the water supply passageway 123.

Wash water in the outer tub 124 is discharged through a water discharge passageway 143. A water discharge valve 145 for controlling the flow of wash water through the water discharge passageway 143 and a water discharge pump 141 for pumping wash water may be provided.

The support rod 135 serves to suspend the outer tub 124 from the casing 110. One end of the support rod 135 is connected to the casing 110 and the other end of the support rod 135 is connected to the outer tub 124 via a suspension 150.

The suspension 150 serves to attenuate vibration of the outer tub 124 during operation of the laundry treatment machine 100. For example, the outer tub 124 may vibrate as the inner tub 122 is rotated. During rotation of the inner tub 122, the suspension 150 may attenuate vibration caused by various factors, such as eccentricity of laundry accommodated in the inner tub 122, the rate of rotation, and resonance of the inner tub 122.

FIG. 3 is a block diagram of the internal configuration of the laundry treatment machine of FIG. 1.

Referring to FIG. 3, the laundry treatment machine 100a may include a first circuit unit 610 including a main controller 210, a second circuit 620 including a display controller 625, the display unit 118, and the input unit 117, and a third circuit 630 including a driving unit 220.

The first circuit unit 610 and the third circuit 630 may be integrated into one circuit.

The display controller 625 may control the input unit 117 for manipulating an operational state of the laundry treatment machine 100a and the display unit 118 for displaying the operational state of the laundry treatment machine 100a.

The driving unit 220 is controlled by the main controller 210 and drives a motor 230. Thus, the washtub 120 is rotated by the motor 230.

The main controller 210 is operated upon receiving an operating signal input by the input unit 117. Thereby, washing, rinsing, and dehydration processes may be implemented.

In addition, the main controller 210 may control the display unit 118 for displaying washing courses, washing time, dehydration time, rinsing time, current operational state, and the like.

The main controller 210 may also control the driving unit 220 for operating the motor 230. In this case, a sensor for sensing the location of a rotor of the motor 230 is not provided at the interior or exterior of the motor 230. That is, the driving unit 220 controls the motor 230 in a sensorless manner.

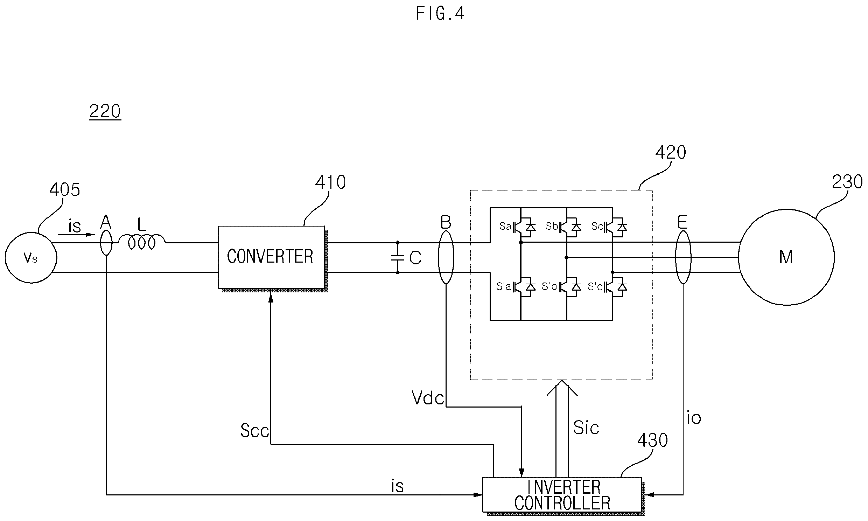

The driving unit 220, which serves to drive the motor 230, may include an inverter (not shown), an inverter controller (not shown), an output current detector (E of FIG. 4) for detecting an output current iₒ flowing into the motor 230. In addition, the driving unit 220 may further include a converter for supplying a Direct Current (DC) power input to the inverter (not shown).

For example, the inverter controller (430 of FIG. 4) of the driving unit 220 estimates the location of the rotor of the motor 230, based on the output current iₒ. In addition, the inverter controller (430 of FIG.4) controls rotation of the motor 230 based on the estimated location of the rotor of the motor 230.

More specifically, if the inverter controller (430 of FIG. 4) outputs a Pulse Width Modulation (PWM) based switching control signal (Sic of FIG. 4) to the inverter (not shown) based on the output current iₒ, the inverter (not shown) may supply an Alternating Current (AC) power having a predetermined frequency to the motor 230 through a fast switching operation. The motor 230 is then rotated by the AC power of the predetermined frequency.

The driving unit 220 will be described later with reference to FIG. 4.

Meanwhile, the main controller 210 may detect laundry quantity based on the current iₒ detected by the current detector (E of FIG. 4). For example, the main controller 210 may detect laundry quantity based on the current iₒ of the motor 230 during rotation of the washtub 120.

The main controller 210 may also detect eccentricity of the washtub 120, i.e., unbalance (UB) of the washtub 120. Detection of eccentricity may be performed based on ripple components of the current iₒ detected by the current detector (E of FIG. 4) or variation in the rate of rotation of the washtub 120.

FIG. 4 is a circuit diagram of the internal configuration of the driving unit shown in FIG. 3.

Referring to FIG. 4, the driving unit 220 according to an embodiment of the present invention serves to drive a sensorless motor and may include a converter 410, an inverter 420, an inverter controller 430, a DC terminal voltage detector B, a smoothing capacitor C, an output current detector E. The driving unit 220 may further include an input current detector A and a reactor L.

The reactor L is located between a commercial AC power source (vₛ) 405 and the converter 410 to perform power factor correction or boosting. In addition, the reactor L may function to restrict harmonic current caused by fast switching.

The input current detector A may detect input current iₛ input from the commercial AC power source 405. To this end, a Current Transformer (CT), a shunt resistor, etc. may be used as the input current detector A. The detected input current iₛ may be a discrete pulse signal and may be input to the inverter controller 430.

The converter 410 converts an AC power, output from the commercial AC power source 405 via the reactor L, into a DC power. Although FIG. 4 illustrates the commercial AC power source 405 as a single phase AC power source, the commercial AC power source 405 may be a three-phase AC power source. Depending on the type of the commercial AC power source 405, the internal configuration of the converter 410 varies.

The converter 410 may consist of diodes without switching elements to perform rectification without a switching operation.

For example, when the AC power source 405 is a single phase AC power source, the converter 410 may include four diodes of a bridge type and, when the AC power source 405 is a three-phase AC power source, the converter 410 may include six diodes of a bridge type.

Alternatively, the converter 410 may be a half bridge type converter in which two switching elements and four diodes are interconnected. When the AC power source 405 is a three-phase AC power source, the converter 410 may include six switching elements and six diodes.

If the converter 410 includes switching elements, the converter 410 may perform boosting, power factor correction, and DC power conversion via switching by the switching elements.

The smoothing capacitor C implements smoothing of an input power and stores the smoothed voltage. Although FIG. 4 illustrates a single smoothing capacitor C, a plurality of smoothing capacitors may be provided to achieve stability.

Although the smoothing capacitor C is shown as being connected to an output terminal of the converter 410 in FIG. 4, the present invention is not limited thereto and a DC power may be directly input to the smoothing capacitor C. For example, a DC power from a solar battery may be directly input to the smoothing capacitor C or may be input to the smoothing capacitor C through DC/DC conversion. The following description will be given focusing on the illustrated parts of FIG. 4.

Both terminals of the smoothing capacitor C store the DC power and thus may be referred to as DC terminals or DC link terminals.

The DC terminal voltage detector B may detect a DC terminal voltage Vdc across both terminals of the smoothing capacitor C. To this end, the DC terminal voltage detector B may include a resistor, an amplifier, etc. The detected DC terminal voltage Vdc may be a discrete pulse signal and may be input to the inverter controller 430.

The inverter 420 may include a plurality of inverter switching elements and convert the DC voltage Vdc smoothed by an on/off operation of the switching elements into three-phase AC voltages va, vb, and vc having predetermined frequencies to thereby output the same to the three-phase synchronous motor 230.

The inverter 420 includes upper arm switching elements Sa, Sb, and Sc and lower arm switching elements S'a, S'b, and S'c, each pair of an upper arm switching element and a lower arm switching element being serially connected and three pairs of upper and lower arm switching elements Sa and S'a, Sb and S'b, and Sc and S'c being connected in parallel. Diodes are connected in antiparallel to the respective switching elements Sa, S'a, Sb, S'b, Sc, and S'c.

The switching elements included in the inverter 420 are respectively turned on or off based on the inverter switching control signal Sic from the inverter controller 430. Thereby, the three-phase AC voltages having predetermined frequencies are output to the three-phase synchronous motor 230.

The inverter controller 430 may control a switching operation of the inverter 420 based on a sensorless scheme. To this end, the inverter controller 430 may receive the output current iₒ detected by the output current detector E.

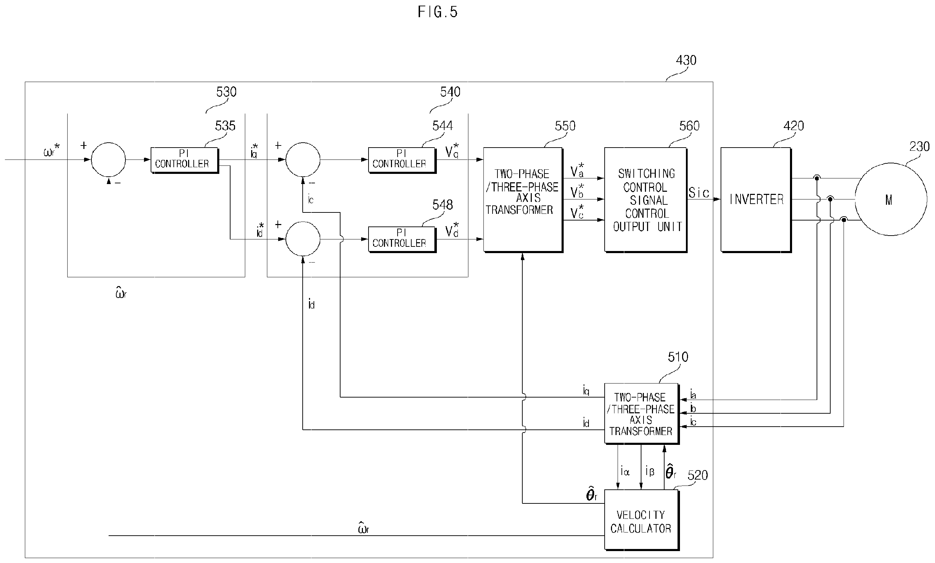

To control the switching operation of the inverter 420, the inverter controller 430 outputs the inverter switching control signal Sic to the inverter 420. The inverter switching control signal Sic is a PWM based switching control signal and is generated based on the output current value iₒ detected by the output current detector E. A detailed description related to output of the inverter switching control signal Sic in the inverter controller 430 will be given later with reference to FIG. 5.

The output current detector E detects the output current iₒ flowing between the inverter 420 and the three-phase motor 230. That is, the output current detector E may detect all output currents iₐ, i_{b}, and i_{c} of the respective phases of the motor 230. Alternatively, the output current detector E may detect output currents of two phases using three-phase balance.

The output current detector E may be located between the inverter 420 and the motor 230. For current detection, a CT, a shunt resistor, etc. may be used as the output current detector E.

When shunt resistors are used, three shunt resistors may be located between the inverter 420 and the synchronous motor 230 or either terminals of the three shunt resistors may be connected to the three lower arm switching elements S'a, S'b, and S'c of the inverter 420. Meanwhile, two shunt resistors may be used based on three-phase balance. Alternatively, when a single shunt resistor is used, the shunt resistor may be located between the above-described capacitor C and the inverter 420.

The detected output current iₒ may be a discrete pulse signal and may be applied to the inverter controller 430. Thus, the inverter switching control signal Sic is generated based on the detected output current iₒ. The following description may explain that the detected output current iₒ is the three-phase output currents iₐ, i_{b}, and i_{c}.

The output voltage detector F is located between the inverter 420 and the motor 230 and detects an output voltage applied from the inverter 420 to the motor 230. When the inverter 420 is operated by a PWM based switching control signal, the output voltage may be a PWM based pulse voltage.

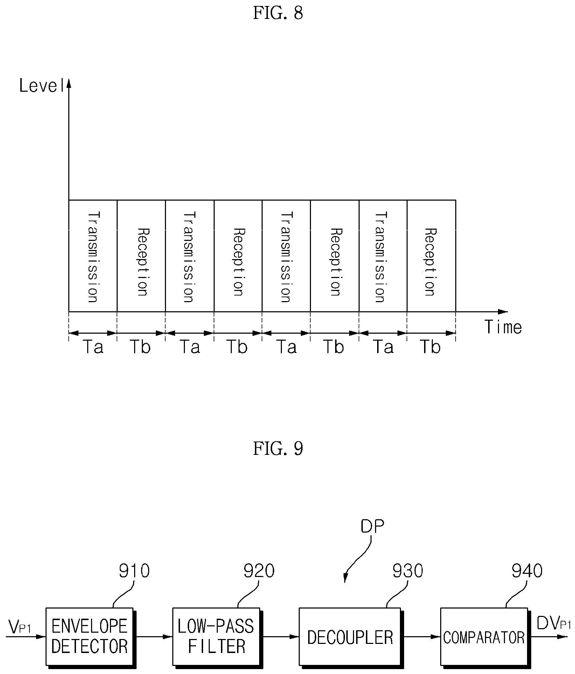

In order to detect the PWM based pulse voltage, the output voltage detector F may include a resistor electrically connected between the inverter 420 and the motor 230 and a comparator connected to one terminal of the resistor. A detailed description of the output voltage detector F will be given later with reference to FIG. 8a.

Meanwhile, the three-phase motor 230 includes a stator and a rotor. An AC power of a predetermined frequency is applied to a coil of the stator of each phase (each of phases a, b, and c), thereby rotating the rotor.

The motor 230 may include, for example, a Surface Mounted Permanent Magnet Synchronous Motor (SMPMSM), an Interior Permanent Magnet Synchronous Magnet Synchronous Motor (IPMSM), or a Synchronous Reluctance Motor (SynRM). Among these motors, the SMPMSM and the IPMSM are Permanent Magnet Synchronous Motors (PMSMs) including a permanent magnet and the SynRM contains no permanent magnet.

If the converter 410 includes a switching element, the inverter controller 430 may control a switching operation of the switching element in the converter 410. To this end, the inverter controller 430 may receive the input current iₛ detected by the input current detector A.

In order to control the switching operation of the converter 410, the inverter controller 430 may output a converter switching control signal Scc to the converter 410. The converter switching control signal Scc may be a PWM based switching control signal and may be generated based on the input current iₛ detected by the input current detector A.

FIG. 5 is a block diagram of the internal configuration of the inverter controller shown in FIG. 4.

Referring to FIG. 5, the inverter controller 430 may include an axis transformer 510, a velocity calculator 520, a current command generator 530, a voltage command generator 540, an axis transformer 550, and a switching control signal output unit 560.

The axis transformer 510 may receive output currents iₐ, i_{b}, and i_{c} detected by the output current detector E and transform the same into two-phase currents i_{α} and i_{β} of the stationary coordinate system and two-phase currents i_{d} and i_{q} of the rotating coordinate system.

The axis transformer 510 may externally output the two-phase currents i_{α} and i_{β} of the stationary coordinate system, two-phase voltages v_{α} and v_{β} of the stationary coordinate system, the two-phase current i_{d} and i_{q} of the rotating coordinate system, and two-phase voltages v_{d} and v_{q} of the rotating coordinate system.

The velocity calculator 520 may receive the two-phase currents i_{α} and i_{β} of the stationary coordinate system and the two-phase voltages v_{α} and v_{β} of the stationary coordinate system, which have been axis-transformed by the axis transformer 510, and calculate a rotor location θ and velocity ω of the motor 230.

The current command generator 530 generates a current command value i*_{q} based on calculated velocity ω̂*ᵣ* and a velocity command value ω*ᵣ. For example, the current command generator 530 may generate the current command value i*_{q} through Proportional Integral (PI) control of a PI controller 535 based on a difference between the calculated velocity ω̂*ᵣ* and the velocity command value ω*ᵣ. Although FIG. 5 illustrates the q-axis current command value i*_{q} as a current command value, the current command generator 530 may further generate a d-axis current command value i*_{d}. The d-axis current command value i*_{d} may be set to 0.

The current command generator 530 may further include a limiter (not shown) that limits the level of the current command value i*_{q} so as not to exceed an allowable range.

Next, the voltage command generator 540 may generate d-axis and q-axis voltage command values v*_{d} and v*_{q} based on the d-axis and q-axis currents i_{d} and i_{q}, which have been axis-transformed into two-phase currents of the rotating coordinate system by the axis transformer 510 and on the current command values i*_{d} and i*_{q} generated by the current command generator 530. For example, the voltage command generator 540 may generate the q-axis voltage command value v*_{q} through PI control of a PI controller 544 based on a difference between the q-axis current i_{q} and the q-axis current command value i*_{q}. In addition, the voltage command generator 540 may generate the d-axis voltage command value v*_{d} through PI control of a PI controller 548 based on a difference between the d-axis current i_{d} and the d-axis current command value i*_{d}. The d-axis voltage command value v*_{d} may be set to 0 to correspond to the d-axis current command value i*_{d} that is set to 0.

The voltage command generator 540 may further include a limiter (not shown) that limits the levels of the d-axis and q-axis voltage command values v*_{d} and v*_{q} so as not to exceed an allowable range.

The generated d-axis and q-axis voltage command values v*_{d} and v*_{q} may be input to the axis transformer 550.

The axis transformer 550 receives the location *θ̂ᵣ* calculated by the velocity calculator 520 and the d-axis and q-axis voltage command values v*_{d} and v*_{q} to implement axis transformation of the same.

First, the axis transformer 550 implements transformation of a two-phase rotating coordinate system into a two-phase stationary coordinate system. In this case, the location *θ̂ᵣ* calculated by the velocity calculator 520 may be used.

The axis transformer 550 performs transformation of the two-phase stationary coordinate system into a three-phase stationary coordinate system. Through this transformation, the axis transformer 550 outputs three-phase output voltage command values v*a, v*_{b}, and v*_{c}.

The switching control signal output unit 560 generates an inverter switching control signal Sic according to a PWM scheme based on the three-phase output voltage command values v*ₐ, v*_{b}, and v*_{c}.

The output inverter switching control signal Sic may be converted into a gate drive signal by a gate driver (not shown) and may then be input to gates of respective switching elements included in the inverter 420. Thereby, the respective switching elements Sa, S'a, Sb, S'b, Sc, and S'c of the inverter 420 may perform a switching operation.

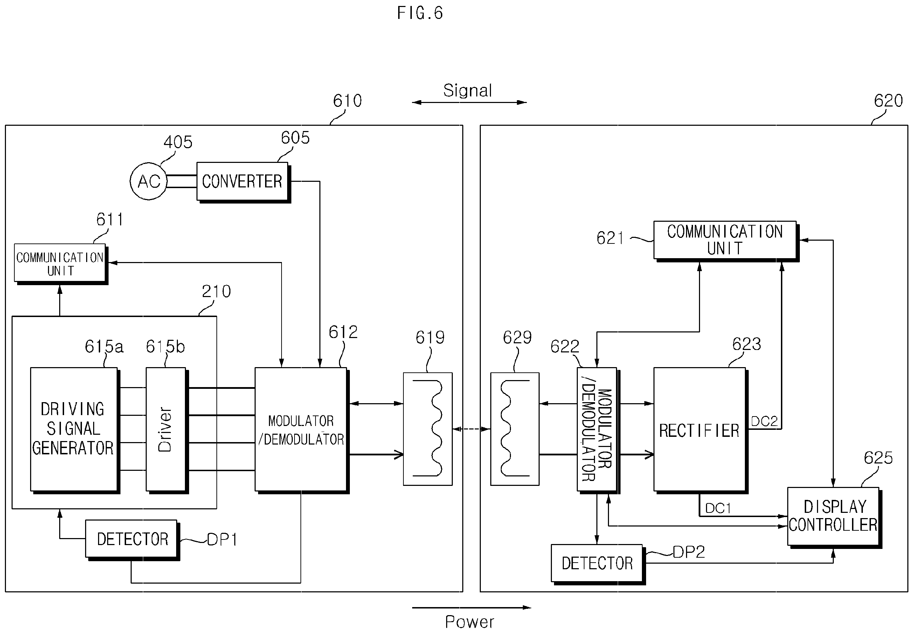

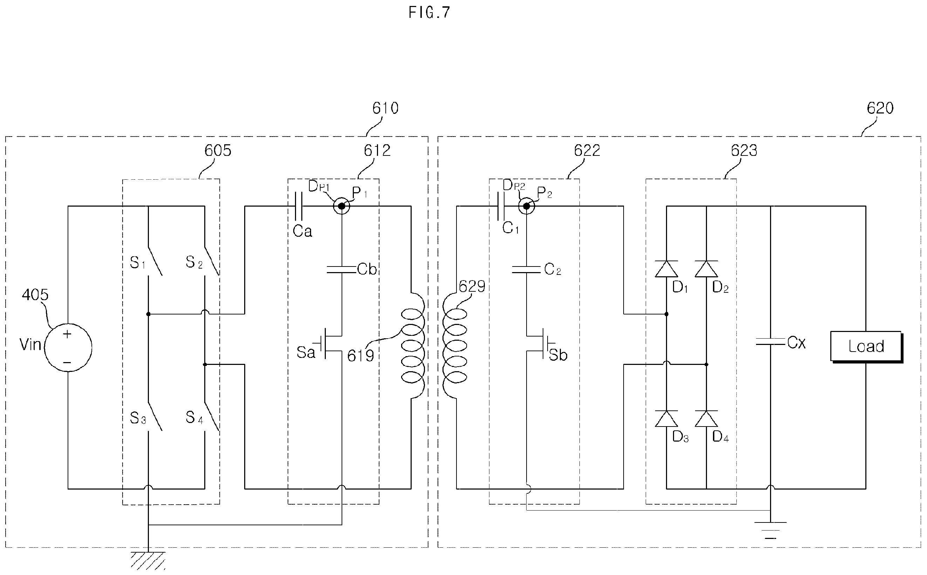

FIG. 6 is a block diagram of the internal configuration of a first circuit unit and a second circuit unit of a home appliance according to an embodiment of the present invention. FIG. 7 is a circuit diagram of the first circuit unit and the second circuit unit of FIG. 6

Referring to FIG. 6, the home appliance may include a first circuit unit 610 and a second circuit unit 620.

The first circuit unit 610 may include a converter 605 for converting an AC power into a DC power, a first coil 619, a first modulator/demodulator for wirelessly transmitting the DC power generated by the converter 605 using the first coil 619, and a first controller 210 for controlling the first modulator/demodulator 612.

The first modulator/demodulator 612 and a second modulator/demodulator 622 enable wireless power transmission and bidirectional communication between the circuit units by performing time-division directional data communication.

Meanwhile, the first modulator/demodulator 612 and the second modulator/demodulator 622 enable wireless power transmission and bidirectional communication by varying impedance according to a load modulation scheme.

The first circuit unit 610 may further include a first communication unit 611 for transmitting a data signal to the first modulator/demodulator 612 or converting a signal received from the first modulator/demodulator 612 into the data signal, for data communication.

The second circuit unit 620 may further include a second communication unit 612 for transmitting a data signal to the second modulator/demodulator 622 or converting a signal received from the second modulator/demodulator 622 into a data signal, for data communication.

The power rectified by the rectifier 623 may be supplied for operation of a second controller 625 in the second circuit unit 620.

In the first circuit unit 610 and the second circuit unit 620, wireless power transmission, bidirectional communication, and other control operations may be performed by the respective controllers 210 and 625, thereby reducing manufacturing costs.

The first circuit unit 610 and the second circuit unit 620 may perform wireless power transmission/reception and data transmission/reception using respective coils 619 and 629, thereby increasing operation efficiency. Further, manufacturing costs are reduced and, particularly, wireless communication can be performed without an additional antenna.

If the second circuit unit 620 is attached to a door that can be opened and closed, since no wires are needed by performing wireless power transmission to the second circuit unit 620, abrasion of the wires and deterioration of aesthetics are prevented.

For example, the first controller 210 of the first circuit unit 610 may receive velocity command information for driving the motor from the second circuit unit 620, particularly, from the second controller 625. The velocity command information may be set according to operation set through the input unit 117 in the second circuit unit 620.

Then, the first controller 210 of the first circuit unit 610 may control the motor to be driven according to the velocity command information through the driving unit 220.

Meanwhile, the second controller 625 of the second circuit unit 620 may receive at least one of operation state information of the home appliance, that is, current operation state, information about current flowing into the motor, voltage information, and information about power consumed in the motor, from the first controller 210 of the first circuit unit 610. Then, the second controller 625 may control the display 118 to display at least one of the current operation information, the information about current flowing into the motor, the voltage information, and the information about power consumed in the motor.

Hereinafter, a description will be given of the case in which the first controller 210 in the first circuit unit 610 is the above-described main controller and the second controller 625 in the second unit 620 is the above-described display controller.

As described above, the main controller 210 may control the driving unit 220 and control the first modulator/demodulator 612 and the first communication unit 611.

The display controller 625 may control the display 118 and control the second modulator/demodulator 622 and the second communication unit 621.

The first circuit unit 610 is operated by a DC power and the DC power may be supplied by the converter 605 which converts an AC power supplied by the AC power source 405 into the DC power.

The first circuit unit 610 may wirelessly transmit the DC power generated by the converter 605 to the second circuit unit 620 using the first coil 619.

The first circuit unit 610 may wirelessly transmit data generated by the main controller 210, for example, information about a washing time and information about a washing course, to the second circuit unit 620 using the first coil 619.

The second circuit unit 620 may wirelessly transmit data input through the input unit or the display to the first circuit unit 610 using the second coil 629.

In this case, the first circuit unit 610 and the second circuit unit 620 may perform data communication using a different impedance according to a load modulation scheme.

That is, the first circuit unit 610 and the second circuit unit 620 may perform data communication by a load modulation scheme, that is, an Amplitude Modulation (AM) scheme.

For example, while the first circuit unit 610 transmits data to the second circuit unit 620, the first modulator/demodulator 612 of the first circuit unit 610 and the second modulator/demodulator 622 of the second circuit unit 620 may have a first impedance and perform data communication based on the first impedance.

As another example, while the second circuit unit 620 transmits data to the first circuit unit 610, the first modulator/demodulator 612 of the first circuit unit 610 and the second modulator/demodulator 622 of the second circuit unit 620 may have a second impedance different from the first impedance and perform data communication based on the second impedance.

To vary impedance of the first modulator/demodulator 612 of the first circuit unit 610 and the second modulator/demodulator 622 of the second circuit unit 620, the first modulator/demodulator 612 of the first circuit unit 610 and the second modulator/demodulator 622 of the second circuit unit 620 desirably include respective switching elements.

The first modulator/demodulator 612 may perform RC modulation or RC demodulation based on a resistor and a capacitor.

The second modulator/demodulator 622 may also perform RC modulation and RC demodulation based on a resistor and a capacitor.

Referring to FIG. 7, the first modulator/demodulator 612 may include a first capacitor Ca, a second capacitor Cb connected in parallel to the first capacitor Ca, and a switching element Sa having one terminal connected to the second capacitor Cb and the other terminal connected to a ground. Impedance may vary according to a switching operation of the first switching element Sa.

The second modulator/demodulator 622 may include a third capacitor C₁, a fourth capacitor connected in parallel to the third capacitor C₁, and a switching element Sb having one terminal connected to the fourth capacitor C₂ and the other terminal connected to ground. Impedance may vary according to a switching operation of the second switching element Sb.

For example, during a first duration, if the first switching element Sa and the second switching element Sb are turned on, the first modulator/demodulator 612 has a Ca+Cb based first impedance due to the first capacitor Ca and the second capacitor Cb which are connected in parallel to each other in the first modulator/demodulator 612 and the second modulator/demodulator 622 has a C₁+C₂ based first impedance due to the third capacitor C₁ and the fourth capacitor C₂ which are connected in parallel to each other in the second modulator/demodulator 622.

As such, during the first duration, data transmission from the first circuit unit 610 to the second circuit unit 620 may be performed.

As another example, during a second duration, if the first switching element Sa and the second switching element Sb are turned off, the first modulator/demodulator 612 has a Ca based second impedance due to the first capacitor Ca in the first modulator/demodulator 612 and the second modulator/demodulator 622 has a C₁ based second impedance due to the third capacitor C₁ and the fourth capacitor C₂ which are connected in parallel to each other in the second modulator/demodulator 622.

As such, during the second duration, data transmission from the second circuit unit 620 to the first circuit unit 610 may be performed.

The first circuit unit 610 may further include a first voltage detector DP1 for detecting a voltage VP1 of a first connection point P₁ between the first capacitor Ca and the second capacitor Cb.

A detected voltage DVP1 of the first connection point is transmitted to the main controller 210 and the main controller 210 may control operation during the above-described first duration or second duration based on a level of the detected voltage DVP1 of the first connection point.

For example, if the level of the detected voltage DVP1 of the first connection point corresponds to the second impedance, the main controller 210 may recognize that data is received from the second circuit unit 620 and control the first switching element Sa to be turned off. Accordingly, a signal received from the first modulator/demodulator 612 may be converted into a data signal via the communication unit 611.

The second circuit unit 620 may further include a second detector DP2 for detecting a voltage VP2 of a second connection point P₂ between the third capacitor C₁ and the fourth capacitor C₂.

A detected voltage DVP2 of the second connection point is transmitted to the display controller 625 and the display controller 625 may control an operation during the above-described first duration or second duration based on a level of the detected voltage DVP2 of the second connection point.

For example, if the level of the detected voltage DVP2 of the second connection point corresponds to the first level, the display controller 625 may recognize that data is received from the first circuit unit 610 and control the second switching element Sb to be turned on. Accordingly, a signal received from the second modulator/demodulator 622 may be converted into a data signal via the second communication unit 621.

Referring to FIG. 7, the converter 605 includes four switching elements S₁ to S₄ in which S₁ and S₃, and S₂ and S₄ are serially connected and a pair of serially connected switching elements S₁ and S₃ is connected in parallel to another pair of serially connected switching elements S₂ and S₄.

Referring to FIG. 7, the rectifier 623 includes four diodes D₁ to D₄ in which D₁ and D₃, and D₂ and D₄ are serially connected and a pair of serially connected diodes D₁ and D₃ is connected in parallel to another pair of serially connected diodes D₂ and D₄.

The first circuit unit 610 and the second circuit unit 620 may perform wireless power transmission/reception and data transmission/reception using respective coils 619 and 629, thereby increasing operation efficiency. Further, manufacturing costs are reduced and, particularly, wireless communication can be performed without an additional antenna.

If the second circuit unit 620 is attached to a door that can be opened and closed, since no wires are needed by performing wireless power transmission to the second circuit unit 620, abrasion of the wires and deterioration of aesthetics are prevented.

The main controller 210 in the first circuit unit 610 may control the converter 605 for wireless power transmission. The main controller 210 may control the converted DC power to be wirelessly transmitted via the first modulator/demodulator 612 and the first coil 619.

Upon receiving a signal from the second circuit unit 620, the main controller 210 in the first circuit unit 610 may receive a data signal converted through the first coil 619, the first modulator/demodulator 612, and first communication unit 611.

To control the first modulator/demodulator 612, the main controller 210 may include a driving signal generator 615a for generating a driving signal and a driver 615b for generating a driving signal.

During data transmission, the main controller 210 controls the communication unit 611 so that a data signal from the communication unit 611 may be wirelessly transmitted to the second circuit unit 620 via the first modulator/demodulator 612 and the first coil 619.

The second circuit unit 620 may include the second coil 629 used for wireless power reception from the first circuit unit 610 and data transmission to the first circuit unit 610, the second modulator/demodulator 622 for converting wireless power received from the second coil 629, the rectifier 623 for rectifying an AC power generated by the second modulator/demodulator 622, and the display controller 625 for controlling operation of the second modulator/demodulator 622. The display controller 625 may be operated based on the power generated by the rectifier 623.

For data communication, the second circuit unit 620 may further include a second communication unit 621 for transmitting a data signal to the second modulator/demodulator 622 or converting a signal received from the second modulator/demodulator 622 into a data signal.

Upon transmission of data to the first circuit unit 610, the display controller 625 may control a data signal generated by the second communication unit 621 to the second coil 629.

The wireless power transmitted to the second circuit unit 620 passes through the second coil 629, the second modulator/demodulator 622, and the rectifier 623 and a rectified power DC1 may be supplied to the display controller 625.

The data transmitted to the second circuit unit 620 may be supplied to the display controller 625 via the second coil 629, the second modulator/demodulator 622, and the communication unit 621.

Meanwhile, the data transmitted by the second circuit unit 620 may be transmitted to the second coil 629 via the display controller 625, the communication unit 621, and the second modulator/demodulator 622 and may be wirelessly transmitted by the second coil 629.

FIGS. 8 to 10b are views referred to for explaining operations of the first circuit unit and the second circuit unit of FIG. 6

FIG. 8 is a view referred to for explaining time-division data communication between the first circuit unit 610 and the second circuit unit 620.

In FIG. 8, a first duration Ta and a second duration Tb are sequentially repeated.

For example, during the first duration, if the first switching element Sa and the second switching element Sb are turned on, the first modulator/demodulator 612 has a Ca+Cb based first impedance due to the first capacitor Ca and the second capacitor Cb which are connected in parallel to each other in the first modulator/demodulator 612 and the second modulator/demodulator 622 has a C₁+C₂ based first impedance due to the third capacitor C₁ and the fourth capacitor C₂ which are connected in parallel to each other in the second modulator/demodulator 622.

As such, during the first duration, data transmission from the first circuit unit 610 to the second circuit unit 620 may be performed.

As another example, during the second duration, if the first switching element Sa and the second switching element Sb are turned off, the first modulator/demodulator 612 has a Ca based second impedance due to the first capacitor Ca in the first modulator/demodulator 612 and the second modulator/demodulator 622 has a C₁ based second impedance due to the third capacitor C₁ and the fourth capacitor C₂ which are connected in parallel to each other in the second modulator/demodulator 622.

As such, during the second duration, data transmission from the second circuit unit 620 to the first circuit unit 610 may be performed.

Thus, bidirectional communication can be performed.

FIG. 9 is a schematic block diagram of the first voltage detector DP1 of FIG. 7.

Referring to FIG. 9, the first voltage detector DP1 may include an envelope detector 910 for detecting an envelope of a first connection point voltage VP1, a low-pass filter for low-pass filtering the detected envelope, a decoupler 930 for eliminating a DC component of the envelope from which a high frequency component is eliminated, and a comparator 940 for comparing the envelope from which the DC component is eliminated with a reference value.

That is, the first voltage detector DP1 may output a voltage DVP1 converted into a low level of the first connection point voltage VP1 as a detected voltage DVP1. The detected voltage DVP1 is transmitted to the main controller 210.

Similarly to the first voltage detector DP1, the second voltage detector DP2 may also include internal blocks as shown in FIG. 9 and a detected voltage DVP2 may be transmitted to the display controller 625.

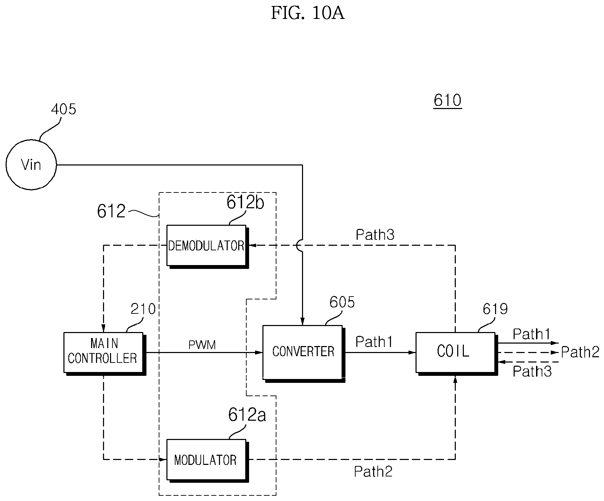

FIG. 10a is a diagram referred to for explaining operation of the first circuit unit.

Referring to FIG. 10a, when the first circuit unit 610 performs wireless power transmission, the converter 605 may convert a AC power Vin from an AC power source 405 into a DC power and the DC power may be converted into the AC power using the coil 619 and the AC power may be wirelessly transmitted to the second circuit unit 620 via the coil 619. That is, a wireless power is transmitted via a path Path1. Meanwhile, as opposed to FIG. 10a, the wireless power may be transmitted via the first modulator/demodulator 612 between the converter 605 and the coil 619.

The first modulator/demodulator 612 may include a first modulator 612a and a first demodulator 612b.

Next, when the first circuit unit 610 transmits data, the data may be wirelessly transmitted to the second circuit unit 620 via a path Path2 of the main controller 210, the first modulator/demodulator 612 (specially, the first modulator 612a), and the coil 619. Meanwhile, as opposed to FIG. 10a, the data may be transmitted via the first communication unit 611 between the main controller 210 and the first modulator/demodulator 612.

When the first circuit unit 610 receives data, the data may be wirelessly received from the second circuit unit 620 via a path Path3 of the coil 619, the first modulator/demodulator 612 (specially, the first demodulator 612b), and the main controller 210.

Meanwhile, as opposed to FIG. 10a, the data may be transmitted via the first communication unit 611 between the first modulator/demodulator 612 and the main controller 210.

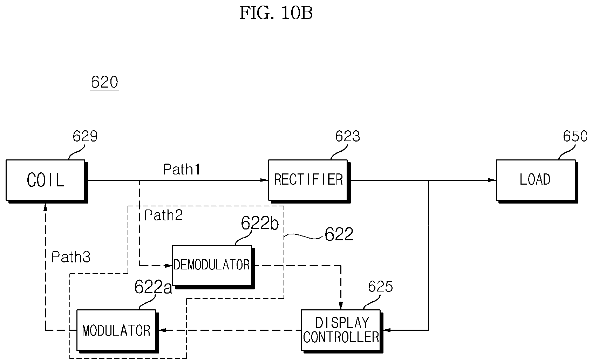

FIG. 10b is a diagram referred to for explaining operation of the second circuit.

Referring to FIG. 10b, when a wireless power is received from the first circuit unit 610, the wireless power may be received by the display controller 625 or a load 625 via a path Path1 of the coil 629, the rectifier 623, the display controller 625 or the load 650.

Meanwhile, as opposed to FIG. 10b, the wireless power may be transmitted to the display controller 625 or the load 650 via the second modulator/demodulator 622 between the coil 629 and the rectifier 623.

The second modulator/demodulator 622 may include a second modulator 622a and a second demodulator 622b.

When data is received from the first circuit unit 610, the data may be received by the display controller 625 via a path Path2 of the coil 629, the second modulator/demodulator 622 (specially, the second demodulator 622b), and the display controller 625.

Meanwhile, as opposed to FIG. 10b, the data may be transmitted via the second communication unit 621 between the second modulator/demodulator 622 (specially, the second demodulator 622b) and the display controller 625.

When data is transmitted to the first circuit unit 610, the data may be wirelessly transmitted to the first circuit unit 610 via a path Path3 of the display controller 625, the second modulator/demodulator 622 (specially, the second modulator 622a), and the coil 629.

Meanwhile, as opposed to FIG. 10b, the data may be transmitted via the second communication unit 621 between the display controller 625 and the second modulator/demodulator 622 (specially, the second modulator 622a).

FIG. 11 is a perspective view showing an air conditioner, which is another exemplary home appliance, according to an embodiment of the present invention.

An air conditioner 100b according to the present invention may include an indoor unit 31b and an outdoor unit 21b connected to the indoor unit 31b as shown in FIG. 11.

The indoor unit 31 of the air conditioner 100b may be any one of a stand type indoor unit, a wall mount type indoor unit, and a ceiling type indoor unit. In FIG. 11, the stand type indoor unit 31b is shown.

Meanwhile, the air conditioner 100b may include at least one of a ventilator, an air purifier, a humidifier, and a heater, which may be operatively connected to the indoor unit 31b and the outdoor unit 21b.

The outdoor unit 21b includes a compressor (not shown) for compressing a refrigerant, an outdoor heat exchanger (not shown) for performing heat exchange between the refrigerant and outdoor air, an accumulator (not shown) for extracting a gaseous refrigerant component from the refrigerant and supplying the extracted gaseous refrigerant component to the compressor, and a four-way valve (not shown) for changing a flow channel of the refrigerant based on a heating operation. In addition, the outdoor unit 21b may further include a plurality of sensors, a valve, and an oil collector, descriptions of which will be omitted.

The outdoor unit 21a operates the compressor and the outdoor heat exchanger to compress the refrigerant or perform heat exchange with the refrigerant based on set conditions and supply the compressed refrigerant or the heat-exchanged refrigerant to the indoor unit 31b. The outdoor unit 21b may be driven according to demand of a remote controller (not shown) or the indoor unit 31b. As a cooling/heating capacity of the air conditioner 100b varies based on the indoor unit which is driven, the number of driven outdoor units and the number of driven compressors installed in outdoor units may be changed.

The outdoor unit 21b supplies the compressed refrigerant to the indoor unit 31b connected thereto.

The indoor unit 31b receives the refrigerant from the outdoor unit 21b and discharges cool or hot air into a room in which the indoor unit 31b is installed. The indoor unit 31b includes an indoor heat exchanger (not shown), an indoor fan (not shown), an expansion valve (not shown) for expanding the refrigerant, and a plurality of sensors (not shown).

The outdoor unit 21b and the indoor unit 31b may be connected to each other via a communication cable to transmit and receive data to and from each other. In addition, the outdoor unit 21b and the indoor unit 31b may be connected to the remote controller (not shown) by wire or wirelessly such that the outdoor unit 21b and the indoor unit 31b can be operated under control of the remote controller (not shown).

The remote controller (not shown) may be connected to the indoor unit 31b to allow a user to input a control command for controlling the indoor unit 31b and to receive and display state information on the indoor unit 31b.

Meanwhile, a display unit 118b may be located on a front panel of the indoor unit 31b. That is, the display unit 118b may be located on the front panel that can be opened and closed for filter exchange.

As described above, when the display unit 118b is located on the front panel of the indoor unit 31b, the display controller 625 for controlling the display unit 118b may be provided in the second circuit unit 620 and the main controller 210 may be provided in the first circuit unit 610 as shown in FIG. 3.

In addition, wireless power transmission and data exchange may be performed between the first circuit unit 610 and the second circuit unit 620 as described previously.

FIG. 12 is a perspective view showing a refrigerator, which is still another exemplary home appliance, according to an embodiment of the present invention.

Referring to FIG. 12, a refrigerator 100c related to the present invention includes a case 111c, which has an inner space divided into a freezing compartment and a refrigerating compartment (not shown), a freezing compartment door 120c for shielding the freezing compartment, and a refrigerating compartment door 140 for shielding the refrigerating compartment, the case 111c, the freezing compartment door 120c, and the refrigerating door 140c defining an outer appearance of the refrigerator 100c.

The freezing compartment door 120c and the refrigerating compartment door 140c may be provided at front surfaces thereof with respective forwardly protruding door handles 121c to assist a user in easily pivoting the freezing compartment door 120c and the refrigerating compartment door 140c by gripping the door handles 121c.

The refrigerating compartment door 140c may further be provided at a front surface thereof with a so-called home bar 180c that allows the user to conveniently retrieve stored items, such as beverages, without opening the refrigerating compartment door 140c.

The freezing compartment door 120c may further be provided at a front surface thereof with a dispenser 160c that allows the user to easily and conveniently retrieve ice or drinking water without opening the freezing compartment door 120c. The freezing compartment door 120c may further be provided with a control panel 210c at the upper side of the dispenser 160c. The control panel 210c serves to control driving operation of the refrigerator 100c and to display a current operating state of the refrigerator 100c.

As described above, if the control panel 210c is arranged on the freezing compartment door 120c that can be opened and closed, the display controller 625 for controlling the control panel 210c may be arranged in the second circuit unit 620 and the main controller 210 may be arranged in the first circuit unit 610 as described with reference to FIG. 3.

In addition, wireless power transmission and data exchange may be implemented between the first circuit unit 610 and the second circuit unit 620 as described above.

While the dispenser 160c is shown in FIG. 12 as being located at the front surface of the freezing compartment door 120c, the present invention is not limited thereto and the dispenser 160c may be located at the front surface of the refrigerating compartment door 140c.

Meanwhile, the freezing compartment may accommodate, in an upper region thereof, an icemaker 190c used to make ice using water supplied thereto and cold air within the freezing compartment and an ice bank 195c mounted within the freezing compartment to receive ice released from the icemaker 190c. In addition, although not shown in FIG. 12, an ice chute (not shown) may further be provided to guide the ice received in the ice bank 195c to fall into the dispenser 160c.

The control panel 210c may include an input unit 220c having a plurality of buttons and a display 230c for displaying control screens, operating states, and the like.

The display 230c displays control screens, operating states, and other information, such as an internal temperature of the refrigerator. For example, the display 230c may display a service type of the dispenser 160c (ice cubes, water, crushed ice), a setting temperature of the freezing compartment, and a setting temperature of the refrigerating compartment.

The display 230c may be any one of a Liquid Crystal Display (LCD), a Light Emitting Diode (LED), and an Organic Light Emitting Diode (OLED). In addition, the display 230c may be a touchscreen that may additionally perform a function of the input unit 220c.

The input unit 220c may include a plurality of manipulation buttons. For example, the input unit 220c may include a dispenser setting button (not shown) for setting a service type of the dispenser (ice cubes, water, crushed ice), a freezing compartment temperature setting button for setting a temperature of the freezing compartment, and a refrigerating compartment temperature setting button for setting a temperature of the refrigerating compartment. The input unit 220c may be a touchscreen that may additionally perform a function of the display 230c.

The refrigerator according to embodiments of the present invention is not limited to a double door type shown in FIG. 12 and may be any one of a one door type refrigerator, a sliding door type refrigerator, a curtain door type refrigerator, and others.

According to an embodiment of the present invention, a home appliance includes a first circuit unit including a converter configured to convert an Alternating Current (AC) power into a Direct Current (DC) power, a first coil, a first modulator/demodulator configured to wirelessly transmit the DC power generated by the converter using the first coil, and a first controller configured to control the first modulator/demodulator, and a second circuit including a second coil configured to receive a wireless power transmitted by the first circuit unit, a second modulator/demodulator configured to convert the wireless power received from the second coil, a rectifier configured to rectify an AC power generated by the second modulator/demodulator, and a second controller configured to control operation of the second modulator/demodulator, wherein the first modulator/demodulator and the second modulator/demodulator perform bidirectional time-division data communication. Therefore, wireless power transmission and bidirectional communication can be performed between the circuit units.

The first circuit unit and the second circuit unit vary impedance according to a load modulation scheme, thereby performing wireless power transmission and bidirectional communication therebetween.

Each of the first circuit unit and the second circuit unit can perform wireless power transmission, bidirectional communication, and other control operations using one controller, thereby reducing manufacturing costs.

Each of the first circuit unit and the second circuit unit can perform wireless power transmission/reception and data transmission/reception using one coil, thereby increasing operation efficiency. Further, manufacturing costs are reduced and, particularly, wireless communication can be performed without an additional antenna.

If the second circuit unit is attached to a door that can be opened and closed, since no wires are needed by performing wireless power transmission to the second circuit unit, abrasion of the wires and deterioration of aesthetics are prevented.

The home appliance according to embodiments of the present invention should not be limited to configurations and methods of the above-described embodiments and all or some of the embodiments may be selectively combined with one another to achieve various alterations.

The operation method of the home appliance according to the present invention may be implemented as processor-readable code that can be written on a processor-readable recording medium included in the home appliance. The processor-readable recording medium may be any type of recording device in which data that can be read by a processor is stored.

While the present invention has been particularly shown and described with reference to exemplary embodiments thereof, it will be understood by those of ordinary skill in the art that various changes in form and details may be made therein without departing from the scope of the present invention as defined by the following claims and such modifications and variations should not be understood individually from the technical idea or aspect of the present invention.

## Claims

1. A home appliance (100) comprising:
a first circuit unit (610) including a converter (605) configured to convert an Alternating Current (AC) power into a Direct Current (DC) power, a first coil (619), a first modulator/demodulator (612) configured to wirelessly transmit the DC power generated by the converter (605) using the first coil (619), a first controller (210) configured to control the first modulator/demodulator (612), and a first communication unit (611) to transmit a data signal to the first modulator/demodulator (612) or convert a signal received from the first modulator/demodulator (612) into the data signal, for data communication; and
a second circuit unit (620) including a second coil (629) configured to receive a wireless power transmitted by the first circuit unit (610), a second modulator/demodulator (622) configured to convert the wireless power received from the second coil (629), a rectifier (623) configured to rectify an AC power generated by the second modulator/demodulator (622), and a second controller (625) configured to control operation of the second modulator/demodulator (622),
**characterized in that** the first modulator/demodulator (612) and the second modulator/demodulator (622) perform bidirectional time-division data communication,
wherein the first modulator/demodulator (612) includes:
a first capacitor (Ca);
a second capacitor (Cb) connected in parallel to the first capacitor (Ca);
a first switching element (Sa) having one terminal connected to the second capacitor (Cb) and the other terminal connected to a ground; and
a first voltage detector (Dp1) configured to detect a voltage of a first connection point (P1) between the first capacitor (Ca) and the second capacitor (Cb),
wherein the voltage detected by the first voltage detector (Dp1) is input to the first controller (210),
wherein if a level of the detected voltage (DVP1) of the first connection point (P1) corresponds to a first impedance, the first controller (210) is configured to control the first switching element (Sa) to be turned off for transmitting a signal received from the first modulator/demodulator (612) to the first communication unit (611), and
wherein the first communication unit (611) is configured to convert the signal received from the first modulator/demodulator (612) into a first data signal.

2. The home appliance according to claim 1, wherein the power rectified by the rectifier (623) is supplied for operation of the second controller (625) in the second circuit unit (620).

3. The home appliance according to claim 1 or 2, wherein the first modulator/demodulator (612) and the second modulator/demodulator (622) vary impedance according to a load modulation scheme.

4. The home appliance according to any one of the claims 1 to 3, wherein impedance varies according to a switching operation of the first switching element (Sa).

5. The home appliance according to any one of the claims 1 to 4, wherein the second modulator/demodulator (622) includes:
a third capacitor (C1);
a fourth capacitor (C2) connected in parallel to the third capacitor (C1); and
a second switching element (Sb) having one terminal connected to the fourth capacitor (C2) and the other terminal connected to a ground, and
wherein impedance varies according to a switching operation of the second switching element (Sb).

6. The home appliance according to claim 1, wherein the first voltage detector (Dp1) includes:
an envelope detector (910) configured to detect an envelope of the voltage of the first connection point (P1),
a low-pass filter (920) configured to low-pass filter the detected envelope,
a decoupler (930) to eliminate a DC component, and
a comparator (940).

7. The home appliance according to any one of the claims 1 to 6,
wherein the second circuit unit (620) further includes a second communication unit (621) to transmit a data signal to the second modulator/demodulator (622) or convert a signal received from the second modulator/demodulator (622) into the data signal, for data communication.

8. The home appliance according to claim 7, wherein the second circuit unit (620) further includes a second detector (DP2) for detecting a voltage (DVP2) of a second connection point (P2) between the third capacitor (C1) and the fourth capacitor (C2),
wherein if a level of the detected voltage (DVP2) of the second connection point (P2) corresponds to a second impedance, the second controller (625) is configured to control the second switching element (Sb) to be turned on for transmitting a signal received from the second modulator/demodulator (622) to the second communication unit (621),
wherein the second communication unit (621) is configured to convert the signal received from the second modulator/demodulator (622) into a second data signal.

9. The home appliance according to any one of the claims 1 to 8, further comprising a door (113 or 120c or 140c) configured to be opened and closed, wherein the second circuit unit (620) is attached to the door.

10. The home appliance according to claim 9, further comprising an input unit and a display, wherein at least one of the input unit and the display is further attached to the door.

11. The home appliance according to claim 9 or 10, wherein the home appliance (100) is any one of a laundry treatment machine (100a), a refrigerator (100c), an air conditioner (100b), and a cooking machine.

## Patentansprüche

1. Haushaltsgerät (100), das Folgendes umfasst:
eine erste Schaltungseinheit (610), die einen Umsetzer (605), der konfiguriert ist, eine Wechselstromleistung (AC) in eine Gleichstromleistung (DC) umzusetzen, eine erste Spule (619), einen ersten Modulator/Demodulator (612), der konfiguriert ist, die Gleichstromleistung, die durch den Umsetzer (605) erzeugt wird, unter Verwendung der ersten Spule (619) drahtlos zu übertragen, eine erste Steuerung (210), die konfiguriert ist, den ersten Modulator/Demodulator (612) zu steuern, und eine erste Kommunikationseinheit (611) zum Übertragen eines Datensignals zu dem ersten Modulator/Demodulator (612) oder zum Umsetzen eines Signals, das von dem ersten Modulator/Demodulator (612) empfangen wird, in das Datensignal für eine Datenkommunikation umfasst; und
eine zweite Schaltungseinheit (620), die eine zweite Spule (629), die konfiguriert ist, eine drahtlose Leistung, die durch die erste Schaltungseinheit (610) übertragen wird, zu empfangen, einen zweiten Modulator/Demodulator (622), der konfiguriert ist, die drahtlose Leistung, die von der zweiten Spule (629) empfangen wird, umzusetzen, einen Gleichrichter (623), der konfiguriert ist, eine Wechselstromleistung, die durch den zweiten Modulator/Demodulator (622) erzeugt wird, gleichzurichten, und eine zweite Steuerung (625), die konfiguriert ist, den Betrieb des zweiten Modulators/Demodulators (622) zu steuern, umfasst,
**dadurch gekennzeichnet, dass**
der erste Modulator/Demodulator (612) und der zweite Modulator/Demodulator (622) eine bidirektionale Zeitmultiplex-Datenkommunikation durchführen,
wobei der erste Modulator/Demodulator (612) Folgendes umfasst:
einen ersten Kondensator (Ca);
einen zweiten Kondensator (Cb), der zu dem ersten Kondensator (Ca) parallel geschaltet ist;
ein erstes Umschaltelement (Sa), wovon ein Anschluss mit dem zweiten Kondensator (Cb) verbunden ist und der andere Anschluss mit einer Masse verbunden ist; und
einen ersten Spannungsdetektor (Dp1), der konfiguriert ist, eine Spannung eines ersten Verbindungspunkts (P1) zwischen dem ersten Kondensator (Ca) und dem zweiten Kondensator (Cb) zu detektieren,
wobei die Spannung, die durch den ersten Spannungsdetektor (Dp1) detektiert wird, in die erste Steuerung (210) eingegeben wird,
wobei dann, wenn eine Höhe der detektierten Spannung (DVP1) des ersten Verbindungspunkts (P1) einer ersten Impedanz entspricht, die erste Steuerung (210) konfiguriert ist, das erste Umschaltelement (Sa) so zu steuern, dass es zum Übertragen eines Signals, das von dem ersten Modulator/Demodulator (612) empfangen wird, an die erste Kommunikationseinheit (611) ausgeschaltet wird, und
wobei die erste Kommunikationseinheit (611) konfiguriert ist, das Signal, das von dem ersten Modulator/Demodulator (612) empfangen wird, in ein erstes Datensignal umzusetzen.

2. Haushaltsgerät nach Anspruch 1, wobei die Leistung, die durch den Gleichrichter (623) gleichgerichtet wird, zum Betrieb der zweiten Steuerung (625) der zweiten Schaltungseinheit (620) zugeführt wird.

3. Haushaltsgerät nach Anspruch 1 oder 2, wobei der erste Modulator/Demodulator (612) und der zweite Modulator/Demodulator (622) die Impedanz in Übereinstimmung mit einem Lastmodulationsschema ändern.

4. Haushaltsgerät nach einem der Ansprüche 1 bis 3, wobei sich die Impedanz in Übereinstimmung mit einem Schaltvorgang des ersten Umschaltelements (Sa) ändert.

5. Haushaltsgerät nach einem der Ansprüche 1 bis 4, wobei der zweite Modulator/Demodulator (622) Folgendes umfasst:
einen dritten Kondensator (C1);
einen vierten Kondensator (C2), der zu dem dritten Kondensator (C1) parallel geschaltet ist; und
ein zweites Umschaltelement (Sb), wovon ein Anschluss mit dem vierten Kondensator (C2) verbunden ist und der andere Anschluss mit Masse verbunden ist, und
wobei sich die Impedanz in Übereinstimmung mit einem Schaltvorgang des zweiten Umschaltelements (Sb) ändert.

6. Haushaltsgerät nach Anspruch 1, wobei der erste Spannungsdetektor (Dp1) Folgendes umfasst:
einen Hüllkurvendetektor (910), der konfiguriert ist, eine Hüllkurve der Spannung des ersten Verbindungspunktes (P1) zu detektieren,
einen Tiefpassfilter (920), der konfiguriert ist, eine Tiefpassfilterung der detektierten Hüllkurve durchzuführen,
einen Entkoppler (930), um einen Gleichspannungsanteil zu entfernen, und
einen Komparator (940).

7. Haushaltsgerät nach einem der Ansprüche 1 bis 6, wobei die zweite Schaltungseinheit (620) ferner eine zweite Kommunikationseinheit (621) umfasst, um ein Datensignal zu dem zweiten Modulator/Demodulator (622) zu übertragen oder um ein Signal, das von dem zweiten Modulator/Demodulator (622) empfangen wird, in das Datensignal für eine Datenkommunikation umzusetzen.

8. Haushaltsgerät nach Anspruch 7, wobei die zweite Schaltungseinheit (620) ferner einen zweiten Detektor (DP2) zum Detektieren einer Spannung (DVP2) eines zweiten Verbindungspunktes (P2) zwischen dem dritten Kondensator (C1) und dem vierten Kondensator (C2) umfasst,
wobei dann, wenn eine Höhe der detektierten Spannung (DVP2) des zweiten Verbindungspunkts (P2) einer zweiten Impedanz entspricht, die zweite Steuerung (625) konfiguriert ist, das zweite Umschaltelement (Sb) so zu steuern, dass es zum Übertragen eines Signals, das von dem zweiten Modulator/Demodulator (622) empfangen wird, an die zweite Kommunikationseinheit (621) eingeschaltet wird,
wobei die zweite Kommunikationseinheit (621) konfiguriert ist, das Signal, das von dem zweiten Modulator/Demodulator (622) empfangen wird, in ein zweites Datensignal umzusetzen.

9. Haushaltsgerät nach einem der Ansprüche 1 bis 8, das ferner eine Tür (113 oder 120c oder 140c) umfasst, die konfiguriert ist, geöffnet und geschlossen zu werden, wobei die zweite Schaltungseinheit (620) an der Tür befestigt ist.

10. Haushaltsgerät nach Anspruch 9, das ferner eine Eingabeeinheit und eine Anzeige umfasst, wobei die Eingabeeinheit und/oder die Anzeige ferner an der Tür befestigt ist.

11. Haushaltsgerät nach Anspruch 9 oder 10, wobei das Haushaltsgerät (100) eine Wäschebehandlungsmaschine (100a), ein Kühlschrank (100c), eine Klimaanlage (100b) oder ein Kochgerät ist.

## Revendications

1. Appareil électroménager (100) comprenant :
une première unité de circuit (610) incluant un convertisseur (605) configuré pour convertir une énergie en courant alternatif (CA) en une énergie en courant continu (CC), une première bobine (619), un premier modulateur/démodulateur (612) configuré pour transmettre sans fil l'énergie CC générée par le convertisseur (605) en utilisant la première bobine (619), un premier dispositif de commande (210) configuré pour commander le premier modulateur/démodulateur (612) et une première unité de communication (611) pour transmettre un signal de données au premier modulateur/démodulateur (612) ou convertir un signal reçu du premier modulateur/démodulateur (612) en signal de données, pour la communication de données ; et
une deuxième unité de circuit (620) incluant une deuxième bobine (629) configurée pour recevoir une énergie sans fil transmise par la première unité de circuit (610), un deuxième modulateur/démodulateur (622) configuré pour convertir l'énergie sans fil reçue de la deuxième bobine (629), un redresseur (623) configuré pour redresser une énergie CA générée par le deuxième modulateur/démodulateur (622) et un deuxième dispositif de commande (625) configuré pour commander le fonctionnement du deuxième modulateur/démodulateur (622),
**caractérisé en ce que** le premier modulateur/démodulateur (612) et le deuxième modulateur/démodulateur (622) effectuent une communication de données bidirectionnelle à répartition dans le temps,
le premier modulateur/démodulateur (612) incluant :
un premier condensateur (Ca) ;
un deuxième condensateur (Cb) connecté en parallèle au premier condensateur (Ca) ;
un premier élément de commutation (Sa) ayant une borne connectée au deuxième condensateur (Cb) et l'autre borne connectée à une masse ; et
un premier détecteur de tension (Dp1) configuré pour détecter une tension d'un premier point de connexion (P1) entre le premier condensateur (Ca) et le deuxième condensateur (Cb),
dans lequel la tension détectée par le premier détecteur de tension (Dp1) est fournie en entrée au premier dispositif de commande (210),
dans lequel, si un niveau de la tension détectée (DVP1) du premier point de connexion (P1) correspond à une première impédance, le premier dispositif de commande (210) est configuré pour commander le premier élément de commutation (Sa) pour être désactivé afin de transmettre un signal reçu du premier modulateur/démodulateur (612) à la première unité de communication (611) et
dans lequel la première unité de communication (611) est configurée pour convertir le signal reçu du premier modulateur/démodulateur (612) en un premier signal de données.

2. Appareil électroménager selon la revendication 1, dans lequel l'énergie redressée par le redresseur (623) est fournie pour le fonctionnement du deuxième dispositif de commande (625) dans la deuxième unité de circuit (620).

3. Appareil électroménager selon la revendication 1 ou 2, dans lequel le premier modulateur/démodulateur (612) et le deuxième modulateur/démodulateur (622) font varier l'impédance en fonction d'un schéma de modulation de charge.

4. Appareil électroménager selon l'une quelconque des revendications 1 à 3, dans lequel l'impédance varie en fonction d'une opération de commutation du premier élément de commutation (Sa).

5. Appareil électroménager selon l'une quelconque des revendications 1 à 4, dans lequel le deuxième modulateur/démodulateur (622) inclut :
un troisième condensateur (C1) ;
un quatrième condensateur (C2) connecté en parallèle au troisième condensateur (C1) ; et
un deuxième élément de commutation (Sb) ayant une borne connectée au quatrième condensateur (C2) et l'autre borne connectée à une masse et
dans lequel l'impédance varie en fonction d'une opération de commutation du deuxième élément de commutation (Sb).

6. Appareil électroménager selon la revendication 1, dans lequel le premier détecteur de tension (Dp1) inclut :
un détecteur d'enveloppe (910) configuré pour détecter une enveloppe de la tension du premier point de connexion (P1),
un filtre passe-bas (920) configuré pour effectuer un filtrage passe-bas de l'enveloppe détectée,
un découpleur (930) pour éliminer une composante CC et
un comparateur (940).

7. Appareil électroménager selon l'une quelconque des revendications 1 à 6,
dans lequel la deuxième unité de circuit (620) inclut en outre une deuxième unité de communication (621) pour transmettre un signal de données au deuxième modulateur/démodulateur (622) ou convertir un signal reçu du deuxième modulateur/démodulateur (622) en signal de données, pour la communication de données.

8. Appareil électroménager selon la revendication 7, dans lequel la deuxième unité de circuit (620) inclut en outre un deuxième détecteur (DP2) pour détecter une tension (DVP2) d'un deuxième point de connexion (P2) entre le troisième condensateur (C1) et le quatrième condensateur (C2),
dans lequel, si un niveau de la tension détectée (DVP2) du deuxième point de connexion (P2) correspond à une deuxième impédance, le deuxième dispositif de commande (625) est configuré pour commander le deuxième élément de commutation (Sb) pour être activé afin de transmettre un signal reçu du deuxième modulateur/démodulateur (622) à la deuxième unité de communication (621),
dans lequel la deuxième unité de communication (621) est configurée pour convertir le signal reçu du deuxième modulateur/démodulateur (622) en un deuxième signal de données.

9. Appareil électroménager selon l'une quelconque des revendications 1 à 8, comprenant en outre une porte (113 ou 120c ou 140c) configurée pour être ouverte et fermée, dans lequel la deuxième unité de circuit (620) est fixée sur la porte.

10. Appareil électroménager selon la revendication 9, comprenant en outre une unité d'entrée et un affichage, l'unité d'entrée et/ou l'affichage étant en outre fixés sur la porte.

11. Appareil électroménager selon la revendication 9 ou 10, lequel appareil électroménager (100) est l'un quelconque parmi une machine de traitement du linge (100a), un réfrigérateur (100c), un climatiseur (100b) et une machine de cuisson.
